# EUROPEAN PATENT APPLICATION

(11) **EP 4 492 403 A1**
(43) Date of publication of application: **15.01.2025**
(21) Application number: 23767121.9
(22) Date of filing: 07.03.2023
(51) Int. Cl.: G21D 3/04, G05B 23/02, G06N 3/02

(54) **METHOD OF PROVIDING MEASURE FOR PLANT IN ABNORMAL STATE BY USING ARTIFICIAL INTELLIGENCE**

(30) Priority: 10.03.2022 KR 20220029794
(71) Applicant: Korea Hydro & Nuclear Power Co., Ltd, Gyeongju-si, Gyeongsangbuk-do 38120 (KR)
(72) Inventor: PARK, Dae Seung, Daejeon 34101 (KR); KIM, Yun Goo, Daejeon 34101 (KR)
(74) Representative: Habermann, Hruschka & Schnabel
(86) International application number: PCT/KR2023/003079
(87) International publication number: WO 2023/172020

(57) **Abstract**

The present invention relates to a method of providing a measure for a plant in an abnormal state by using artificial intelligence, and comprises the steps of: preparing measure data, for a plant in an abnormal state, to be analyzed; analyzing the measure data to be analyzed to identify expected measure information for the abnormal state; identifying a measure for a current operating state on the basis of the expected measure information; and notifying an operator of the measure.

## Description

### Technical Field

The present disclosure relates to a method of providing actions for an unusual state of a plant using artificial intelligence.

### Background Art

There are various states/situations in a power plant or factory, and for a specific state/situation, a power plant operator or factory manager has a procedure or preparation plan (manual) for each situation in order to prepare for the specific state/situation.

In the related art, an operator or factory manager must closely monitor a state of a power plant or factory. A specific state/situation may cause embarrassment when a monitoring period of time may continue, monitoring of a state/situation that occurs at the time of worker change such as shift work may be neglected, or there is no time to predict or prepare for actions or an operation.

When a guidance is possible through prediction of the actions/operation in such a state/situation, a burden on the operation of the operator or the management of the manager can be reduced.

### Disclosure

### Technical Problem

Therefore, an object of the present disclosure is to provide a method of providing actions for an unusual state of a plant using artificial intelligence.

### Technical Solution

The object of the present disclosure is achieved by a method of providing actions for an unusual state of a plant using artificial intelligence, the method including: preparing actions data as an analysis target for the unusual state of the plant; analyzing the actions data as an analysis target to ascertain expected actions information for the unusual state; confirming actions for a current operation state based on the expected actions information; and notifying an operator of the actions.

The actions data as an analysis target may be obtained from at least one of (1) existing operation data and (2) virtual data.

The virtual data may be obtained by using at least one of an accident scenario and a simulation.

The analyzing of the actions data as an analysis target may include ascertaining unusual state operation variables related to the unusual state.

The preparing of the actions data as an analysis target using the existing data may include considering the unusual state operation variables.

The method may further include verifying a procedure and a manual using the unusual state operation variables.

The unusual state may include at least one of an abnormal state, an emergency state, an alarm state, and a specific state of the plant.

### Advantageous Effects

According to the present disclosure, a method of providing actions for an unusual state of a plant using artificial intelligence is provided.

### Description of Drawings

FIG. 1 illustrating a system that provides actions for an unusual state of a plant using artificial intelligence according to an embodiment of the present disclosure.
FIG. 2 is a flowchart illustrating a method of providing actions for an unusual state of a plant using artificial intelligence according to an embodiment of the present disclosure. Mode for Disclosure

In the present disclosure, an `unusual state' may be any one of an alert state, an alarm state, an abnormal state, an emergency state, and a specific state in a plant.

'Actions(measures)' in the present disclosure include 'operation item'.

'Plant' in the present disclosure includes a power plant, and particularly, may be a nuclear power plant.

Hereinafter, a power plant will be illustrated as the plant and an alarm state or abnormal state will be described as the unusual state, but the present disclosure is not limited thereto.

In the present disclosure, it is possible to discriminate the state of the plant using artificial intelligence, and depending on this state, the operator or manager easily takes actions in preparation for a specific state/situation. When a specific state/situation is encountered, next actions are predicted or a guideline is presented, a selection is simplified, a determination time is reduced, a decision is facilitated, and a burden of an operation is reduced, similar to a function of provides a guidance like a navigation upon driving a car.

The present disclosure presents a method for deriving actions/operation matters using artificial intelligence technology and neural network circuit theory and deriving major actions/operation matters according to the degree of contribution.

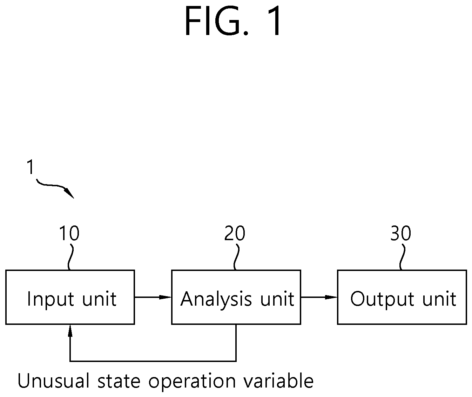

FIG. 1 illustrates a system that provides actions for an unusual state of a plant using artificial intelligence according to an embodiment of the present disclosure.

A system 1 according to the present disclosure includes an input unit 10, an analysis unit 20, and an output unit 30.

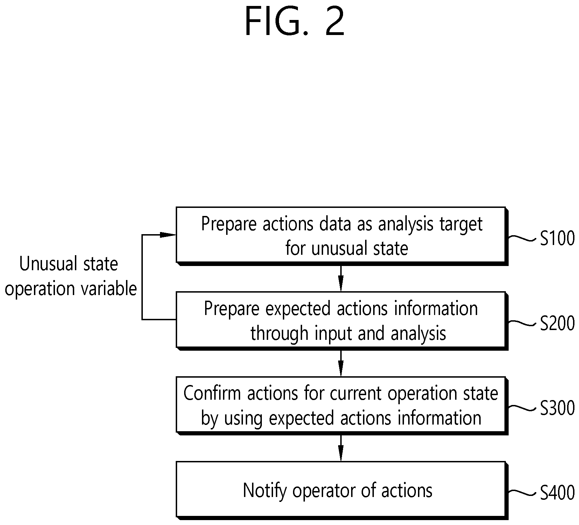

An operation of the system 1 will be described in detail with reference to FIG. 2.

FIG. 2 is a flowchart illustrating a method of providing actions for an unusual state of a plant using artificial intelligence according to an embodiment of the present disclosure.

First, actions data as an analysis target is prepared (S100).

The actions data as an analysis target is obtained from (1) existing operation data and (2) virtual data.

The virtual data is obtained through a procedure, a manual, a scenario, and a simulator.

An example of creation of the virtual data is as follows.

In the case of a power plant, there may be scenarios of occurrence of emergency, abnormal, and alarm situations. Examples of the scenarios include actions for a situation in a specific environment, such as a case where a specific pump fails or a case where a turbine stops. A normal state is simulated, and a situation such as a failure or turbine stopping is put into a scenario to derive an abnormal situation as a virtual state. In this case, the virtual state is necessary in order to create an operation history for a determination as to emergency, abnormal, and alarm, and is necessary because it is dangerous to create an abnormal situation in an actual power plant for such a determination.

The virtual data is used when existing actions data is not present or is insufficient, and may not be used when existing operation data is sufficient.

Further, for the virtual data, actions data as an analysis target for an unusual state that are difficult to secure from the existing actions data may be secured.

The prepared actions data as an analysis target is input to the system 1 through the input unit 10.

Next, the actions data as an analysis target is analyzed and expected actions information is prepared (S200).

The analysis of the actions data as an analysis target is performed by the analysis unit 20. The analysis may be performed through artificial intelligence, especially, neural network learning.

In the analysis, the analysis is performed through neural network learning, and unusual state operation variables obtained from the neural network learning are utilized again for preparation of the actions data as an analysis target.

More detailed description of the unusual state operation variables is as follows.

In the case of an alarm, an unusual state such as pressure being equal to or higher than a specific value, temperature being equal to or higher than a specific value, or a pump turning off may occur. Thus, a list of variables related to a specific device or specific apparatus among major devices, not all devices, is selected, and abnormality, emergency, or alarm is determined through neural network learning in consideration of an analysis method and an application method for these variables. There is also a way for performing the determination in consideration of a situation of an entire power plant or factory, but since the determination performed in consideration of a specific variable may be more accurate, the variable list (unusual state operation variables) is needed.

The unusual state operation variables are used for inverse calculation of a degree of contribution to a confirmation of the unusual state (inverse calculation of factors) and are used for verification of the procedure or the manual. The procedure or manual improved through the verification are used for creation of the virtual data.

That is, a degree of contribution to a determination of each action is subjected to inverse calculation using a neural network circuit theory so that the expected actions information according to the degree of contribution is derived.

The unusual state operation variables may be variables (factors) or may be values for confirming a specific situation. The `inverse calculation of the factors' may also be confirmation of the factors through artificial intelligence. Through explainable artificial intelligence, other factors associated with a specific factor may also be confirmed. Using this explainable artificial intelligence, the inverse calculation of the factors becomes possible.

Therefore, actions for a current operation state are confirmed by using the expected actions information (S300).

Examples of a case where the actions are necessary are as follows. A temperature of a specific device should not be increased, and when the temperature increases, appropriate actions are to decrease the temperature through turn-off of the device or the like. In this case, it is necessary to confirm the temperature of the specific device. When the temperature of the device is important, neural network learning related to the temperature of the device must be completed and actions or operation of the device should be made predictable.

That is, appropriate actions for the current operation state are proposed.

Finally, the operator is notified of derived actions (S400).

The notification is performed by using the output unit 30 and may be performed by using various ways, such as sound and screen display.

In other embodiments, the notification may be output to various entities, and the actions for the unusual state may also be notified of.

According to the present disclosure, the plant can be operated or managed without a procedure, and useful actions at a specific point in time can be predicted through learning of a history and actions in a specific state/situation of the plant in the past.

When there is no history of a specific state/situation of the plant in the past, it is possible to provide useful actions/matters by utilizing a procedure or a management plan and utilizing a logical determination.

Therefore, according to the present disclosure, a burden on and determination time of the operator or manager are reduced, and selection of actions becomes easier.

The above-described embodiments are examples for describing the present disclosure, and the present disclosure is not limited thereto. Since those skilled in the art to which the present disclosure pertains will be able to implement the present disclosure through various modifications of the embodiments, the technical protection scope of the present disclosure should be determined by the appended claims.

## Claims

1. A method of providing actions for an unusual state of a plant using artificial intelligence, the method comprising:
preparing actions data as an analysis target for the unusual state of the plant;
analyzing the actions data as an analysis target to ascertain expected actions information for the unusual state;
confirming actions for a current operation state based on the expected actions information; and
notifying an operator of the actions.

2. The method of claim 1, wherein the actions data as an analysis target is obtained from at least one of (1) existing operation data and (2) virtual data.

3. The method of claim 2, wherein the virtual data is obtained by using at least one of an accident scenario and a simulation.

4. The method of claim 1, wherein the analyzing of the actions data as an analysis target includes ascertaining unusual state operation variables related to the unusual state.

5. The method of claim 4, wherein the preparing of the actions data as an analysis target using the existing data includes considering the unusual state operation variables.

6. The method of claim 5, further comprising:
verifying a procedure and a manual using the unusual state operation variables.

7. The method of claim 1, wherein the unusual state includes at least one of an unusual state, an emergency state, an alarm state, and a specific state of the plant.
